Europäisches Patentamt

(19) European Patent Office (11) Numéro de publication: **0 148 091**
Office européen des brevets **B1**

(12) **FASCICULE DE BREVET EUROPEEN**

(45) Date de publication du fascicule du brevet: (51) Int. Cl.⁴: **G 21 C 21/00, B 65 G 47/31**
24.06.87

(21) Numéro de dépôt: **84402751.6**

(22) Date de dépôt: **28.12.84**

(54) **Dispositif de transfert de gaines d'éléments de combustible nucléaire à un poste fixe de remplissage en pastilles.**

(30) Priorité: **30.12.83 FR 8321125**

(43) Date de publication de la demande:
**10.07.85 Bulletin 85/28**

(45) Mention de la délivrance du brevet:
**24.06.87 Bulletin 87/26**

(84) Etats contractants désignés:
**BE DE GB IT SE**

(56) Documents cités:
**DE - A - 2 005 389**
**FR - A - 2 257 130**

(73) Titulaire: **SOCIETE COGEMA, FRAMATOME et URANIUM PECHINEY, 2, rue Paul Dautier, F-78140 Velizy Villacoublay (FR)**

(72) Inventeur: **Vere, Bernard, 1, les Chustets Brie et Angonnes, F-38320 Eybens (FR)**
Inventeur: **Mathevon, Paul, Avenue Achille Maucuer, F-84500 Bollene (FR)**

(74) Mandataire: **Fort, Jacques et al, CABINET PLASSERAUD 84, rue d'Amsterdam, F-75009 Paris (FR)**

ACTORUM AG

**Description**

L'invention a pour objet un dispositif de transfert au poste de remplissage de gaines d'éléments de combustible nucléaire du type comportant un empilement de pastilles de combustible dans une gaine qui peut atteindre plusieurs mètres. On connaît déjà des dispositifs de remplissage (brevet FR-A-2 257 130) comportant une table vibrante qui provoque l'entrée des pastilles par une extrémité d'une gaine fermée à l'autre extrémité et la progression des pastilles dans la gaine.

L'invention vise à fournir un dispositif de transfert capable de saisir les gaines appartenant à une nappe placée sur un râtelier de dépose, de les amener en succession aux emplacements où s'effectuent les opérations requises et de replacer les gaines remplies sur un râtelier sous forme d'une nappe qui peut être reprise par le même engin de manutention que celui qui a placé la nappe sur le râtelier de dépose.

Dans ce but, l'invention propose notamment un dispositif de transfert en vue du remplissage, comprenant un ensemble de transfert de gaines d'un râtelier de dépose à un emplacement de chargement puis à un râtelier de reprise, caractérisé en ce qu'il comprend un premier transporteur de prise en bloc d'une nappe de plusieurs gaines placées sur le râtelier de dépose, des moyens associés au premier transporteur de changement de pas d'écartement des gaines dans la nappe et de presentation de la nappe à l'emplacement de chargement simultané de plusieurs gaines par une machine à table vibrante d'insertion de pastilles de combustible, des moyens de changement de pas destinés à ramener les gaines au pas initial, un transporteur coopérant avec les moyens de changement de pas pour amener en bloc la nappe de gaines sur le poste de reprise et des moyens de commande automatique synchronisée des constituants de l'ensemble, assurant l'ensemble des déplacements des gaines qui interviennent toujours dans une même direction.

Les moyens de changement de pas peuvent être constitués chacun de deux unités, afin de permettre successivement un élargissement du pas et un raccourcissement. L'élargissement du pas peut par exemple être utilisé, avant remplissage, pour permettre la pesée individuelle des gaines et, après remplissage, pour permettre le nettoyage de la partie terminale des gaines. Les moyens de changement de pas seront généralement constitués par des convoyeurs à pas de pèlerin. La machine à table vibrante sera desservie par des moyens d'indexage rétractables à deux positions permettant de placer avec précision les parties terminales ouvertes des gaines dans des nez d'indexage et de les maintenir en place avant la reprise et le maintien sur la table vibrante pendant les opérations de remplissage, afin que la progression des pastilles de combustible s'effectue sans difficultés.

L'invention sera mieux comprise à la lecture de la description qui suit d'un mode particulier d'exécution, donné à titre d'exemple non limitatif. La description se réfère aux dessins qui l'accompagnent, dans lesquels:

la figure 1 est un schéma de principe en élévation montrant les différentes unités constitutives de l'ensemble de transfert du dispositif;

la figure 2 est une vue de dessus d'une fraction de l'ensemble de la figure 1;

la figure 3 montre le râtelier de dépose de l'ensemble de transfert de la figure 1, vu depuis la gauche;

la figure 4 est une vue à grande échelle d'une des platines du râtelier et du mécanisme de montée et descente qui lui est associé, vus dans la direction de la flèche IV de la figure 3;

la figure 5 est une vue à grande échelle, en élévation, de la fraction de l'unité 2 de l'ensemble qui est contenue dans le cadre V de la figure 1;

la figure 6 est une coupe suivant la ligne VI-VI de la figure 5;

la figure 7 est un schéma de principe de l'unité rétractable d'indexage et de désindexage de l'ensemble de transfert vu depuis la droite de la figure 1;

la figure 8, détail de la figure 7, montre à grande échelle et en coupe partielle l'équipage mobile de l'unité d'indexage;

la figure 9 est une vue de l'équipage mobile depuis la droite de la figure 8, en coupe partielle suivant la ligne IX-IX;

la figure 10 est une vue de détail dans la même direction que la figure 8, montrant le vérin placé dans le plan de symétrie de l'équipage mobile.

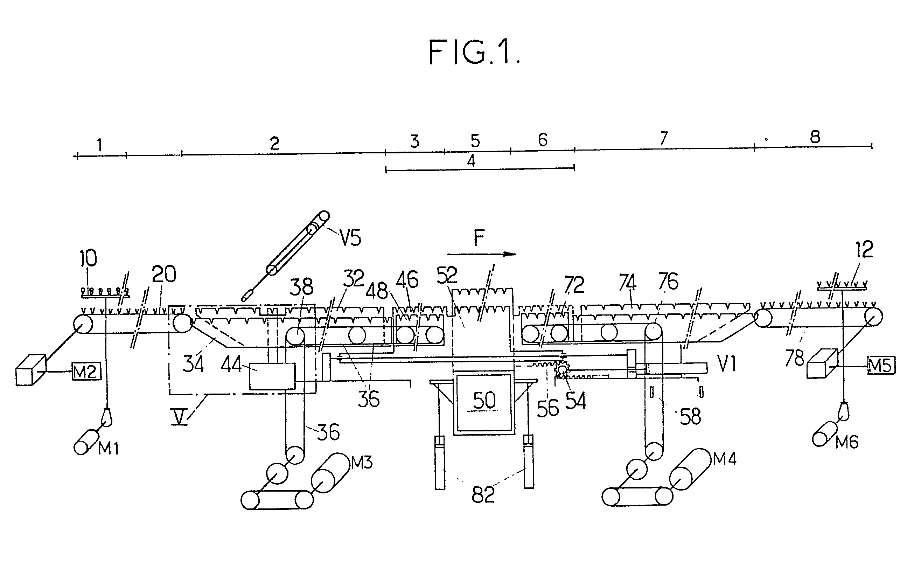

Le dispositif des transferts au poste fixe de remplissage qui sera maintenant décrit est notamment utilisable dans une installation du genre revendiqué dans la demande de brevet EP-A-0 148 092 déposée le même jour que la présente demande pour «Installation de fabrication à plusieurs postes fixes de travail et à dispositif de manutention». L'ensemble de transfert de ce dispositif est prévu pour prendre les gaines, au nombre de vingt-quatre par exemple, placées sur un râtelier de dépose 10 (figure 1) par un engin de manutention, disposées avec un pas déterminé, pour les amener aux différents emplacements où s'effectuent les opérations successives nécessaires et enfin les transférer sur un râtelier de reprise 12 sous forme d'une nappe au même pas que sur le râtelier de dépose. Cette nappe peut être ainsi reprise par le même engin de manutention que celui qui a servi à la dépose.

Cet ensemble de transferts peut être regardé comme intégrant plusieurs unités intervenant en séquence sur une même gaine, placées dans les zones indiquées par les chiffres 1 à 7 sur la figure 1, et assurant les fonctions suivantes:

Unité 1: transfert latéral à partir du râtelier de dépose 10,

Unité 2: premier changement de pas pour lecture et pesage,

Unité 3: second changement de pas, pour mise au pas de fonctionnement de la table vibrante de chargement,

Unité 4: approvisionnement en gaines de la table vibrante et évacuation,

Unité 5: indexage et désindexage,

Unité 6: troisième changement de pas pour nettoyage des gaines,

Unité 7: quatrième changement de pas pour remise au pas du râtelier de dépose,

Unité 8: transfert latéral vers le râtelier de reprise 12.

Les unités 7 et 8 ont une constitution qui est pratiquement symétrique de celle des unités 2 et 1 et ne seront donc pas décrites en détail.

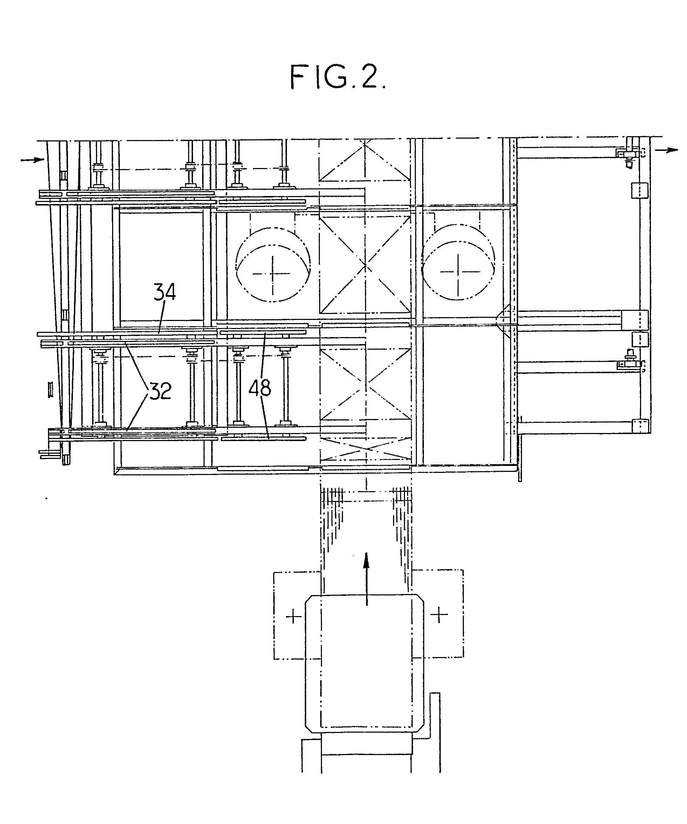

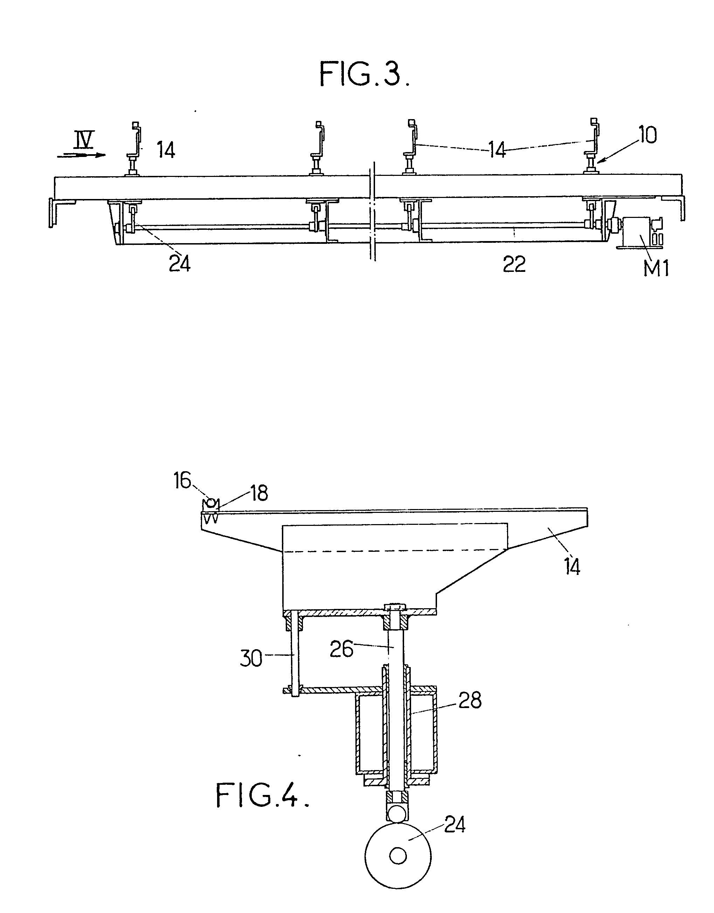

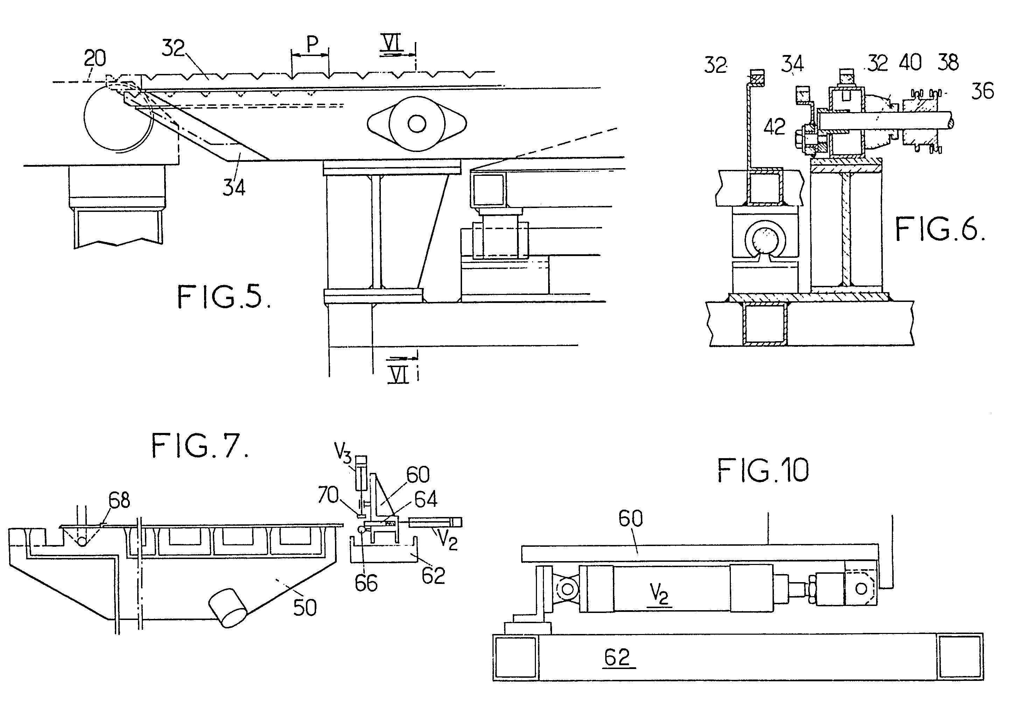

Le râtelier de dépose 10 occupe un emplacement fixe dans le sens de déplacement des gaines, indiqué par la flèche F sur les figures 1 et 2. Le râtelier de dépose 10 (figures 3 et 4) se compose de platines parallèles 14 destinées à soutenir de place en place les gaines, dont une seule 16 est montrée en figure 4 dans des mailles 18 de retenue au pas de dépose par l'engin de manutention. Toutes les platines sont identiques. Elles sont déplaçables entre une position haute, dans laquelle elles sont montrées en figure 1, et une position basse où elles se trouvent au-dessous du niveau des courroies 20 du transporteur (unité 1) qui sera décrit plus loin. Le déplacement vertical des platines 14 entre ces deux positions est commandé par un moteur M1 (figures 1 et 3). Ce moteur entraîne un arbre 22 qui porte des cames de manoeuvre 24. Chacune de ces cames 24 coopère avec une tige poussoir 26 qui coulisse dans un tube de guidage 28 d'un châssis support et dont l'extrémité haute est fixée à la platine. Le guidage de la platine assuré par la tige poussoir 26 est complété par le coulissement d'une tige verticale 30 de guidage dans le châssis.

L'unité 1 (unité de transfert latéral) comporte un convoyeur comportant des courroies intercalées entre les platines 14 et présentant des crans de réception des gaines répartis au même pas que les mailles 18 des platines. Toutes ces courroies 20 sont prévues pour être simultanément entraînées par un moteur M2. En descendant les platines 14 préalablement chargées, on dépose toute la nappe de gaines sur le convoyeur et la mise en action du moteur M2 permet le défilement continu pour dégager complètement les gaines par déplacement dans le sens de la flèche F, de sorte que le poste de dépose redevient libre.

L'unité 2 est destinée à assurer un changement de pas nécessaire pour présenter les gaines une à une à un emplacement de lecture et de pesage. L'encombrement du dispositif destiné à assurer cette fonction n'est pas compatible avec la disposition compacte des gaines souhaitable pour le transport par l'engin de manutention. L'unité de changement de pas 2 montré en figures 1 et 2 est du type à pas de pélerin. Elle comprend plusieurs ensembles comportant chacun deux barres fixes 32 et une barre mobile 34. L'organe moteur du mécanisme d'entraînement des barres mobiles 34 est constitué par un moteur M3 qui entraîne, par l'intermédiaire de chaînes 36, les poulies 38 clavetées sur des arbres 40. Chaque arbre porte en bout deux manetons excentrés 42 (figure 6) montés dans les paliers de deux barres mobiles 34 correspondantes. On voit que chaque tour du maneton provoque un déplacement cyclique de la barre mobile. Les barres mobiles sont placées par rapport à l'unité 1 de façon qu'au cours de leur mouvement de montée et d'avance les barres mobiles 34 prennent la gaine la plus proche placée sur le transporteur et l'avancent d'une distance égale au pas $p$ d'encoches prévues sur les barres fixes 32. La commande du moteur M2 est assujettie à un détecteur de présence de façon que le convoyeur à courroies 20 effectue une avance égale à un pas, ou à un multiple de pas si la nappe est incomplète, pendant que l'unité 2 avance d'un pas $p$ la gaine qui vient d'être saisie. Cette opération est répétitive, de sorte qu'à chaque tour du maneton excentré 42, l'unité 2 saisit une nouvelle gaine tandis que, simultanément, la série des précédentes est transférée d'un cran sur les barres fixes 32.

Une des mailles des barres fixes 32 (la cinquième sur la figure 1) est remplacée par un dispositif de lecture permettant d'enregistrer le repère porté par la gaine, et de pesage. Ce dispositif peut comporter des éléments optiques classiques et une balance électronique à partir de composants couramment disponibles de sorte qu'il n'est pas nécessaire de le décrire en détail.

L'unité 3, destinée à effectuer un second changement de pas, de façon à ramener ce pas à une valeur égale à celui de la machine présentant les pastilles en bout de la table vibrante, est également du type à pas de pélerin. Cette unité comporte également des barres 46 présentant une hauteur immuable et qu'on appellera pour cette raison des barres «fixes» et des barres mobiles 38 ayant un mouvement cyclique également commandé par le moteur M3 ce qui assure un synchronisme absolu entre la seconde et la troisième unité. Mais les manetons de commande des barres 48 ont une excentration telle qu'ils gardent un pas différent de celui des manetons de commande des barres 34. L'excentration peut être par exemple de 10 mm au lieu de 20 mm, le pas de maille des barres 46 étant de 20 mm au lieu de 40 mm.

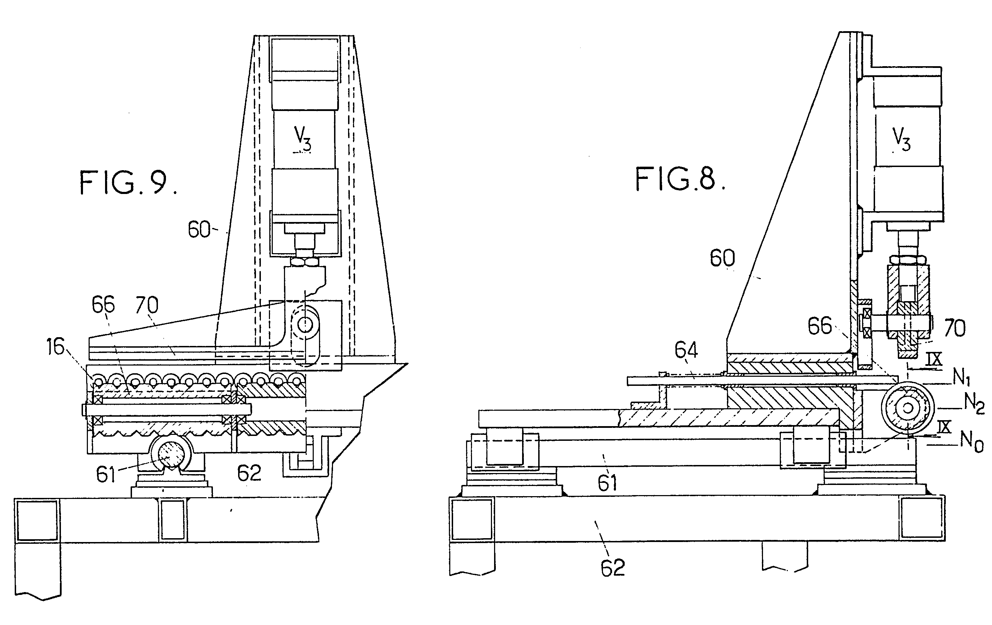

L'unité 4, assurant l'approvisionnement de la table vibrante 50 en gaines et l'évacuation des gaines après remplissage, est combinée aux unités 3 et 6. Les barres fixes 46 de l'unité 3 sont en effet solidaires de barres 52 ayant le même pas de maille, placées en aval des barres 46 dans le sens de circulation (flèche F). Un mécanisme d'entraînement permet de déplacer longitudinalement l'ensemble des barres fixes 46 et 52 de la position montrée en traits pleins sur la figure 1 à la position montrée en tirets après effacement à l'aide des vérins 82 des appuis des gaines portés par la table vibrante. L'amplitude de ce déplacement est telle que les gaines portées par les barres 46 viennent à un emplacement de prise par un mécanisme d'alimentation de la table vibrante 50 et les gaines déjà remplies, portées par les barres 52, viennent en position d'évacuation. Le nombre de mailles des barres 46 et 52 sera fixé par le nombre de gaines que peut simultanément alimenter la table vibrante 50. Sur la figure 9, on a supposé, a titre d'exemple, des barres à vingt-quatre mailles.

Le mécanisme de déplacement longitudinal des barres 46-52 peut être de nature très variable. Le mécanisme montré à titre d'exemple en figure 1 comporte un vérin V1 dont la tige de piston est attelée à un double pignon fou 54 qui engraîne deux crémallères fixes et deux crémallères 56 solidaires d'un chariot portant les barres 46 et 52. Le vérin est muni de deux interrupteurs de fin de course 58 correspondant, l'un à la position du chariot montrée en figure 1 en traits pleins, l'autre à la position montrée en tirets.

L'unité 5, située en bout de la table vibrante 50 mais à l'opposé de l'arrivée des pastilles, a pour fonction d'assurer un indexage, c'est-à-dire l'alignement axial précis et le maintien des gaines avant la reprise en maintien et au niveau par les dispositifs propres de la table vibrante et, ultérieurement, après pastillage, la manoeuvre inverse de dégagement (désindexage) des gaines en vue de leur enlèvement par l'unité 4.

L'équipage mobile comporte un châssis 60 muni de glissières lui permettant de coulisser sur deux axes 61 parallèles à l'axe des gaines, portés par un socle 62 lui-même mobile suivant le même axe pour s'adapter à deux longueurs de gaines. Un vérin V2 monté entre le châssis 60 et le socle 62 (figure 10) permet d'avancer le châssis sur les axes 61 à partir de la position où il est montré en figure 7. Le châssis 60 porte des tiges à ressorts 64 (figure 8) en nombre égal à celui des gaines et au même écartement. Il porte également des rouleaux d'entrée coaxiaux 66 présentant des gorges de guidage ayant le même écartement que les gaines. Ces gorges sont de dimensions telles qu'elles s'accostent sur les embouts des gaines 16 et les maintiennent latéralement. La course du vérin V2 est telle que l'avancée du châssis 60 sous l'action de ce vérin provoque la venue des tiges 64 en butée dans des nez d'indexation 68 portés par la table vibrante 50, l'enfoncement des tiges 64 dans le châssis 60 et la compressoin des ressorts des tiges.

Le châssis 60 porte un vérin vertical V3 dont la tige se termine par une barrette 70 destinée à plaquer les gaines 16 contre les rouleaux 66 et à les maintenir en position avant la reprise en maintien par des dispositifs de maintien associés à la table vibrante 50 et non représentés.

La table vibrante est munie de moyens, constitués par des vérins 82 sur la figure 1, permettant de l'amener aux deux niveaux désignés par N1 et N2 sur la figure 8, correspondant respectivement à l'indexage et au remplissage en pastilles de combustible, et d'échapper vers le bas sous le niveau NO pour permettre le transfert par l'unité 4.

L'unité 6, destinée à ramener les gaines à un écartement permettant un nettoyage de l'embout de gaine par passage de bourre, a une constitution similaire à celle de l'unité 3. Elle comporte un jeu de barres mobiles 72 actionnées à partir d'un moteur M4 par l'intermédiaire de poulies et de chaînes.

L'unité 7, de constitution similaire à celle de l'unité 2, comporte également des barres fixes 74 et des barres mobiles 76. Ces dernières sont également entraînées par le moteur M4, en synchronisme avec les barres 72. L'unité 7 permet le nettoyage et le transfert en continu de la série de gaines vers le transporteur 87, symétrique du transporteur 20 et actionné par un moteur M5, et ce au même pas que lors de la dépose.

Enfin, le transporteur 78, qui constitue l'unité 8, coopère avec le râtelier de reprise 12, actionné par un moteur M6.

L'ensemble de transfert peut être complète par des moyens lui permettant d'accepter plusieurs longueurs de gaines. Dans le cas illustré en figure 1, ces moyens complémentaires comportent un vérin V5 qui, avant l'opération de pesée, réaligne chaque gaine au fur et à mesure qu'elle se présente devant le vérin. Ces moyens comportent également un mécanisme (non représenté) permettant de donner au socle 62 du châssis 60 (figure 7) des positions différentes suivant la longueur des gaines à traiter. En règle générale d'ailleurs, le nombre de longueurs à traiter sera faible et ne dépassera pas deux.

L'ensemble de transfert est associé à des moyens de commande automatique synchronisée de l'ensemble des organes moteurs, pouvant être constitués par un automate programmable associé à une armoire de puissance. Il n'est pas nécessaire de décrire ici la constitution et la programmation de l'automate car elles découlent directement de la séquence des opérations à effectuer, qui seront maintenant résumées.

Une nappe de gaines fermées à une extrémité est placée sur le râtelier 10 au moment où la séquence d'opérations commence. Le râtelier 10 est alors descendu à l'aide du moteur M1, ce qui fait reposer les gaines sur les mailles du transporteur 20. Le moteur M2 est actionné pour déplacer le transporteur 20 sur une longueur suffisante pour dégager complètement les gaines du râtelier 10. Celui-ci devient alors libre et peut être ramené en position initiale, en attente d'une nouvelle nappe de gaines. Le moteur M2 du transporteur 20 et le moteur M3 actionnés en même temps interviennent alors, avec un fonctionnement continu, pour provoquer le chargement de la série de gaines sur l'unité 2, avec changement de pas. Chaque fois qu'une gaine repose sur le dispositif de lecture et de pesage 44, le repère porté par la gaine et son poids sont enregistrés. Cette unité 2 permet de constituer, à partir d'une nappe à pas serré pour réduire son encombrement lors de la manutention, une nappe à pas large laissant la place requise au dispositif de lecture et de pesage.

En même temps que l'unité 2, le moteur M3 actionne l'unité 3 de façon que les gaines arrivées en bout de l'unité 2 subissent un nouveau changement de pas, qui les ramène dans une position compacte compatible avec le pas de chargement simultané de toutes les gaines par la machine à table vibrante 50. A l'issue de ce changement de pas, l'ensemble des gaines se trouve sur les barres fixes 46. La mise en action du vérin V1 ramène les barres 46 au-dessus de la machine à table vibrante 50 et, simultanément, amène les gaines précédemment chargées au-dessus des barres 72 de l'unité 6, destinée à effectuer un nouveau changement de pas. Les moyens de soulèvement de la table vibrante, schématisés sur la figure 1 par des vérins 82, ont auparavant dégagé les gaines des dispositifs de maintien associés à la table vibrante 50. La remontée de la table 50 au niveau N2 autorise que les moyens d'indexage interviennent alors et enfoncent les gaines dans les nez d'indexage 68, de façon à assurer une mise en place précise des gaines en face des couloirs d'alimentation en pastilles. Après positionnement de la table vibrante, mise en place d'un plateau de chargement en pastilles, approvisionnement à l'aide d'une clayette de pastilles et actionnement de la table vibrante et du mécanisme de poussée des pastilles, le remplissage des gaines est effectué. Le désindexage est ensuite effectué par l'unité 5 après retour de la table vibrante

au niveau N1 et avancée du châssis 60 et action combinée des vérins V2 et V3. Il est inutile de décrire la suite des opérations, symétriques de celles effectuées en amont de la machine de chargement à table vibrante. Il suffit de noter qu'un nettoyage des parties terminales des gaines, pour enlever la poudre de combustible, est effectué à l'aide de bourres dans la zone indiquée par 6 sur la figure 1, pendant le défilement continu sur les barres fixes 74.

**Revendications**

1. Dispositif de transfert de gaines d'éléments de combustible nucléaire à un poste de remplissage, comprenant un ensemble de transfert de gaines depuis un râtelier de dépose jusqu'à un emplacement de chargement par une machine à table vibrante, puis à un râtelier de reprise, caractérisé en ce que l'ensemble de transfert comprend un premier transporteur (20) de prise en bloc d'une nappe de plusieurs gaines placées sur le râtelier de dépose (10) des premiers moyens (32, 34, 46, 48, 52) associés au premier transporteur et destinés à changer le pas d'écartement des gaines dans la nappe et à présenter la nappe à l'emplacement de chargement simultané de plusieurs gaines par la machine à table vibrante (50) d'insertion de pastilles de combustible, des seconds moyens de changement de pas (72, 74, 76) destinés à ramener les gaines au pas initial, un transporteur (78) coopérant avec les seconds moyens de changement de pas pour amener en bloc la nappe de gaines sur un râtelier de reprise (12) et des moyens de commande automatique synchronisée des constituants de l'ensemble assurant les déplacements des gaines toujours dans la même direction.

2. Dispositif suivant la revendication 1, caractérisé en ce que les premiers moyens de changement de pas comportent une unité (2) d'augmentation du pas et de présentation successive des gaines, une à une, à un poste de lecture et de pesage (44), et une unité (3) de resserrement des gaines au pas de présentation à la machine à table vibrante.

3. Dispositif suivant la revendication 1 ou 2, caractérisé en ce que les seconds moyens de changement de pas comprennent une unité (6) d'augmentation du pas en vue de la présentation à un poste de nottoyage et une unité d'amenée des gaines sur le transporteur (78).

4. Dispositif suivant la revendication 1, 2 ou 3, caractérisé en ce que les moyens de changement de pas sont du type à pas de pélerin.

5. Dispositif suivant la revendication 1 ou 2, caractérisé en ce que les premiers moyens comportent un transporteur à pas de pélerin ayant des barres support (48) animées d'un mouvement cyclique d'avance des gaines et des barres fixes (46) déplaçables entre une position de réception des gaines amenées par les barres mobiles et une position de présentation des gaines à la machine à table vibrante.

6. Dispositif suivant la revendication 5, caractérisé en ce que les barres fixes (46) sont solidaires d'un second jeu de barres fixes (52) appartenant au second moyen de changement de pas, le déplacement de l'ensemble des jeux de barres fixes pour amener un jeu de gaines vides face à la table vibrante provoquant également le déplacement de gaines remplies portées par le second jeu de barres fixes depuis un emplacement situé face à la table vibrante jusqu'à un emplacement permettant le fonctionnement des seconds moyens de changement de pas.

7. Dispositif suivant la revendication 6, caractérisé en ce que la table vibrante comporte des moyens (82) de soulèvement des gaines au-dessus des barres fixes (46, 52) pour les dégager et de dépose des gaines sur lesdites barres.

8. Dispositif suivant l'une quelconque des revendications précédentes, caractérisé en ce que l'ensemble de transfert comprend des moyens déplaçables d'indexage et de désindexage des gaines sur la table vibrante (50), comportant un support mobile dans le sens longitudinal par rapport aux gaines entre une position dans laquelle il est écarté de l'extrémité fermée des gaines et une position dans laquelle des piges à ressorts individuels portées par le support appliquant chacune une gaine contre un nez d'indexage porté par la table vibrante.

9. Dispositif suivant la revendication 8, caractérisé en ce que le support (60) porte également des moyens de serrage des gaines (V3, 70) permettant de dégager les gaines des nez d'indexage par recul du support (60).

**Patentansprüche**

1. Vorrichtung zum Transportieren von Kernbrennstoffhüllen zu einer Füllstation, die eine Transporteinrichtung der Hüllen von einem Entnahmegestell bis zum Ort der Füllung durch eine Vibrationstischmaschine bis zu einem Wiederaufnahmegestell aufweist, dadurch gekennzeichnet, dass die Transporteinrichtung einen ersten Förderer (20) zur Aufnahme einer Schicht aus mehreren Hüllen im ganzen, die auf dem Entnahmegestell (10) angeordnet sind, aufweist, erste Mittel (32, 34, 46, 48, 52), die mit dem ersten Förderer verbunden sind und dazu bestimmt sind, die Schrittweite der Hüllen in einer Schicht zu verändern und die Schicht an den Ort der Füllung von gleichzeitig mehreren Hüllen durch eine Vibrationstischmaschine (50) durch das Einfüllen von Brennstofftabletten zu bringen, aufweist, zweite Schrittänderungsmittel (72, 74, 76), die zur Zurückführung der Hüllen zum ursprünglichen Schritt bestimmt sind, aufweist, einen Förderer (78), der mit den zweiten Schrittänderungsmitteln zusammenwirkt, um als Ganzes eine Schicht von Hüllen einem Wiederaufnahmegestell (20) zuzuführen, aufweist und Mittel zur automatischen Synchronisationssteuerung der Bestandteile der Konstruktion, die die Verlagerung der Hüllen immer in der gleichen Richtung sicherstellt, aufweist.

2. Vorrichtung nach Anspruch 1, dadurch gekennzeichnet, dass die ersten Mittel zur Schrittänderung eine Einheit (2) zur Schrittvergrösserung und zur aufeinanderfolgenden Übergabe der Hülle eine nach der anderen an eine Lesestation und eine Wägestation (44), und eine Einheit (3) der Schrittverengung der Hüllen zur Übergabe an die Vibrationstischmaschine aufweisen.

3. Vorrichtung nach Anspruch 1 oder 2, dadurch gekennzeichnet, dass die zweiten Mittel zur Schrittveränderung eine Einheit (6) zur Vergrösserung der Schritte in bezug auf die Übergabe an eine Waschstation und eine Einheit zur Überführung der Hüllen auf dem Förderer (78) aufweisen.

4. Vorrichtung nach den Ansprüchen 1, 2 oder 3, dadurch gekennzeichnet, dass die Schrittänderungsmittel von der Art der Pilgerschritte sind.

5. Vorrichtung nach den Ansprüchen 1 oder 2, dadurch gekennzeichnet, dass die ersten Mittel einen Pilgerschrittförderer aufweisen, der Förderstangen (48), angetrieben durch eine zylindrische Bewegung, zum Vorschub der Hüllen und feststehende Stangen (46) aufweist, die zwischen einer Position zur Aufnahme der Hüllen, die durch die bewegbaren Stangen herangebracht wurden, und einer Übergabeposition der Hüllen zur Vibrationstischmaschine verschiebbar sind.

6. Vorrichtung nach Anspruch 5, dadurch gekennzeichnet, dass die festen Stangen (46) kraftschlüssig mit einem zweiten Satz von festen Stangen (52) verbunden sind, die den zweiten Mitteln zur Schrittänderung zugehörig sind, wobei die Verschiebung der Gesamtheit der Sätze von festen Stangen zum Herbringen eines Satzes von leeren Hüllen zum Vibrationstisch in gleicher Weise die Verschiebung der gefüllten Hüllen, die von dem zweiten Satz von festen Stangen getragen werden, von einer Stelle, die am Vibrationstisch gelegen ist bis zu einer Stelle, die die Wirkungsweise der zweiten Mittel zur Schrittänderung ermöglicht, hervorruft.

7. Vorrichtung nach Anspruch 6, dadurch gekennzeichnet, dass der Vibrationstisch Mittel (82) zum Anheben der Hüllen von unterhalb der festen Stangen (46, 52), um jene freizumachen und um die Hüllen auf den genannten Stangen abzusetzen, aufweist.

8. Vorrichtung nach einem der vorangehenden Ansprüche, dadurch gekennzeichnet, dass die Übertragungskonstruktion Mittel zur Verschiebung der Indexierung und der Desindexierung der Hüllen auf dem Vibrationstisch (50) aufweist, der einen beweglichen Support in einem longitudinalen Sinne in bezug auf die Hüllen zwischen einer Position, in der er von dem geschlossenen Ende der Hülle entfernt ist, und einer Position, in welcher Stangen mit individueller Spannkraft getragen von dem Support, jeder einer Hülle gegen eine Indexnase, die vom Vibrationstisch getragen wird, drücken, aufweist.

9. Vorrichtung nach Anspruch 8, dadurch gekennzeichnet, dass der Support (60) in gleicher Weise Mittel zum Verpressen der Hüllen (V3, 70) trägt, die es erlauben, die Hüllen von der Indexnase durch Rücklauf des Supports (60) freizumachen.

**Claims**

1. Device for transferring nuclear fuel element sheaths at a filling station, comprising a transferring set for transferring sheaths from a laying rack to a loading location for loading said sheaths by a vibrating table machine, then to a removing rack, characterized in that the transferring set comprises a first conveyor (20) for engaging as a whole a layer of a plurality of sheaths disposed on the laying rack (10), first means (32, 34, 46, 48, 52) associated with the first conveyor for changing the sheaths mutual spacing pitch within the layer and for presenting the layer to the loading location for simultaneously loading a plurality of sheaths with fuel pellets by the vibrating table machine (50), second pitch change means (72, 74, 76) for bringing back the sheaths to their initial mutual spacing; a conveyor (78) engaged with the second pitch change means for bringing as a whole the sheath layer on a removing rack (12) and automatic control means for synchronized actuation of the elements of the whole sets arranged for moving the sheaths always in the same direction.

2. Device according to claim 1, characterized in that the first pitch change means comprise a unit (2) for increasing the mutual spacing between adjacent sheaths and presenting the sheaths successively one by one at a reading and weighing station (44), and a unit for decreasing the spacing of the sheath to the spacing for presentation to the vibrating table machine.

3. Device according to claim 1 or 2, characterized in that the second pitch change means comprise a unit (6) for increasing the pitch for presentation to a cleaning station and a unit for bringing the sheaths onto the conveyor (78).

4. Device according to claim 1, 2 or 3, characterized in that the pitch change means are of the pilgrim step type.

5. Device according to claim 1 or 2, characterized in that the first means comprise a pilgrim step transporter having support bars (48) cyclically driven for causing the sheaths to advance and fixed bars (46) movable between a position for receiving the sheaths brought by the movable support bars and a position for presenting the sheaths to the vibrating table machine.

6. Device according to claim 5, characterized in that the fixed bars (46) are fast with a second set of fixed bars (52) belonging to the second pitch change means, the movement of all sets of fixed bars so as to bring a set of empty sheaths in alignment with the vibrating table machine also causing movement of filled sheaths carried by the second set of fixed bars from a position facing the vibrating table machine to a position allowing the functioning of the second pitch change means.

7. Device according to claim 6, characterized in that the vibrating table comprises means (82) for rising the sheaths above the fixed bars (46, 52) so as to free them and for laying the sheaths on said bars.

8. Device according to any one of the preceding claims, characterized in that the transferring set comprises movable means for indexing and deindexing the sheaths on the vibrating table (50), comprising a support movable in the longitudinal direction with respect to the sheaths between a position in which it is moved away from the closed ends on the sheath and a position in which individual spring loaded rods carried by the support each applying a sheath against an indexing nose on the vibrating table.

9. Device according to claim 8, characterized in that the support (60) also carries means for closing the sheaths so as to free the sheaths from the indexing noses by retraction of the support.

# FIG.1.

1    2    3   5   6    7    8

4

V5

F

10   20    38   32   48   46   52    72   74   76    12

34   44    36    V1    78

M2

36    50    56 54    58    M5

V

M1    36     M3    82    M4    M6

0 148 091

# FIG.2.

# FIG.3.

# FIG.4.

FIG.6.

FIG.5.

FIG.7.

FIG.10

FIG.8.

FIG.9.